# EUROPEAN PATENT SPECIFICATION

(11) **EP 1 571 030 B1**
(45) Date of publication and mention of the grant of the patent: **15.04.2009**
(21) Application number: 05003934.6
(22) Date of filing: 23.02.2005
(51) Int. Cl.: F02M 37/10

(54) **Retention plate for fuel pump module**
Halteplatte für Kraftstoffpumpenmodul
Plaque de rétention pour module de pompe à carburant

(30) Priority: 04.03.2004 US 793475
(43) Date of publication of application: 07.09.2005
(73) Proprietor: Denso International America, Inc., Southfield, Michigan 48086 (US)
(72) Inventor: Powell, Patrick, Farmington Hills, Michigan 48331 (US)
(74) Representative: Kuhnen & Wacker

(56) References cited:
- FR-A- 2 238 889
- FR-A- 2 838 681
- US-A- 5 207 463
- US-B1- 6 533 288
- PATENT ABSTRACTS OF JAPAN vol. 1996, no. 06, 28 June 1996 (1996-06-28) -& JP 08 049614 A (TOYOTA MOTOR CORP), 20 February 1996 (1996-02-20)

## Description

### FIELD OF THE INVENTION

The present invention relates to automotive fuel sending devices and more particularly, to a retention plate operable to secure a fuel sender assembly to a fuel tank.

### BACKGROUND OF THE INVENTION

Generally, automotive fuel sending devices are secured through an aperture in a fuel tank by a locking ring. Typically, structure incorporated on the locking ring is adapted to cooperatively mate with structure extending from the fuel tank. In this manner, a flange from a fuel sender sealably captured between the locking ring and the fuel tank. Conventionally, the locking ring includes lands or extensions for engaging L-shaped retaining members associated with the fuel tank.

The fuel sender flange typically includes outlet ports extending therefrom for communicating fuel and vapor away from the fuel tank. The fuel sender flange also typically includes an electrical connector thereon for coupling with an electrical harness providing power to the fuel sender.

It is desirable to maintain a fluid tight seal between the fuel sender and fuel tank interface. Accordingly, it is desirable to provide a fuel sender and fuel tank configuration that resists torsional deformation or twisting of the tank near the fuel sender interface to deter fuel or vapor leak thereat during an impact. Furthermore, it is desirable to protect the fuel sender flange from damage in the event of an impact.

From US 6,533,288 B1 and from US 5,207,463 A, a fuel tank assembly according to the preamble of claim 1 is known. However, the described fuel tank assemblies do not provide any protection of the fuel sender unit in case of an accident. Accordingly, these fuel tank assemblies have the drawback that the fuel center unit might be destroyed during an accident.

From JP 08-49614 A, there is known a stopper element covering connectors for preventing disconnections of this disconnectors. However, the stopper element is only described to protect the conectors against dust but not in case of an accident.

### SUMMARY OF THE INVENTION

The object of the invention is to maintain a fluid tight seal between a fuel sender and a fuel tank interface and to protect the fuel sender from damage in the event of an impact. The object is solved by a fuel tank assembly according to claim 1. Further developments are characterized in the dependent claims.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

FIG. 1 is a perspective view of the retention plate according to the present teachings shown assembled to a fuel tank;

FIG. 2 is a front exploded perspective view of the fuel sender assembly, retention plate and radial ring according to the present teachings;

FIG. 3 is a rear exploded perspective view of the assembly of FIG. 2;

FIG. 4 is a sectional view taken along line 4-4 of FIG. 1;

FIG. 5 is a perspective view illustrating outlet ports of the fuel sender assembly passing through openings provided on the retention plate;

FIG. 6 is a perspective view illustrating an installation step; and

FIG. 7 is a perspective view of the fuel sender assembly and retention plate shown in an installed position.

### DETAILED DESCRIPTION OF THE PREFERRED EMBODIMENTS

The following description of the preferred embodiment(s) is merely exemplary in nature and is in no way intended to limit the invention, its application, or uses.

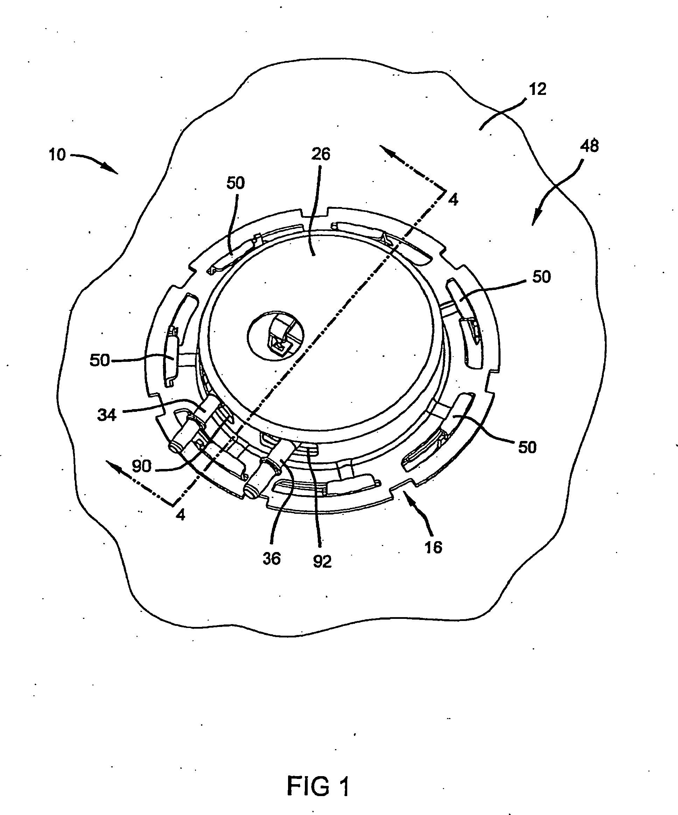

With initial reference to FIGS. 1 - 3, a fuel tank assembly for a motor vehicle is illustrated and generally identified at reference 10. The fuel tank assembly 10 generally includes a fuel tank 12, having a fuel tank retaining portion 16, a fuel sender assembly 20 having a lower fuel sender module 28 and an upper fuel sender flange 30, and a retention plate 26. The upper fuel sender flange 30 includes a fuel delivery line or first outlet port 36 for communicating fuel from the fuel tank 12 and a fuel return line or second outlet port 34 for communicating return from the fuel tank 12. An electrical receiver 38 is arranged on the upper fuel sender flange 30 of the fuel sender assembly 20. As will be described in greater detail, the retention plate 26 according to the present teachings is operable to couple the upper fuel sender flange 30 of the fuel sender assembly 20 to the fuel tank 12. In addition, the retention plate 26 provides an upper boundary for the first and second outlet port 34 and 36 of the fuel sender assembly 20.

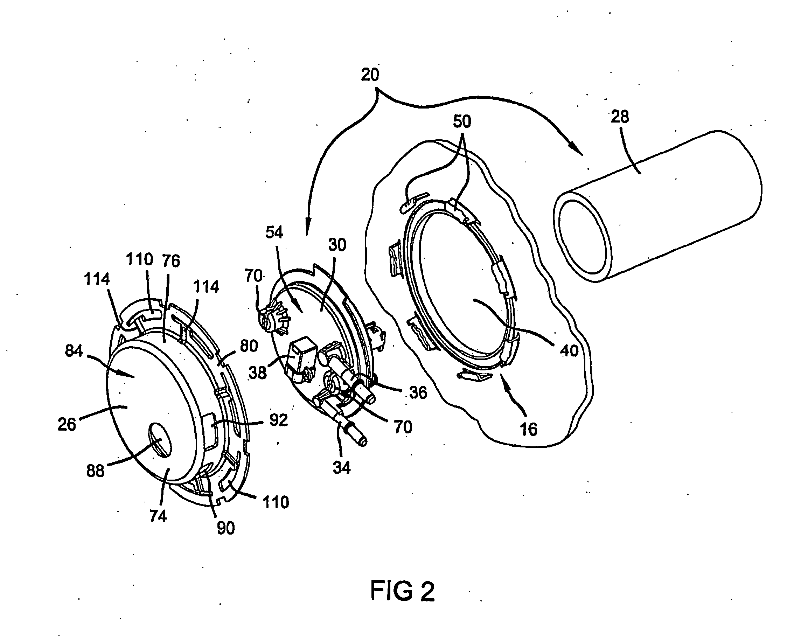

With particular reference now to FIG. 2, the retaining portion 16 of the tank 12 will be described in greater detail. The retaining portion 16 defines a central passage 40 and includes a radial flange 42 adapted to be coupled to the fuel tank 12. The central passage 40 of the retaining portion 16 aligns with an upper aperture formed on a generally planar upper surface 48 of the fuel tank 12. The retaining portion 16 includes a plurality of retaining members 50 overmolded into tank 12. The retaining members 50 extend in a generally L-shaped configuration around the retaining portion 16. It is appreciated that the retaining members 50 may comprise other configurations. While the retaining portion 16 is shown as an integrally molded feature of the tank 12, it may also comprise a distinct component in the form of a ring for example and adapted to mate with the tank 12.

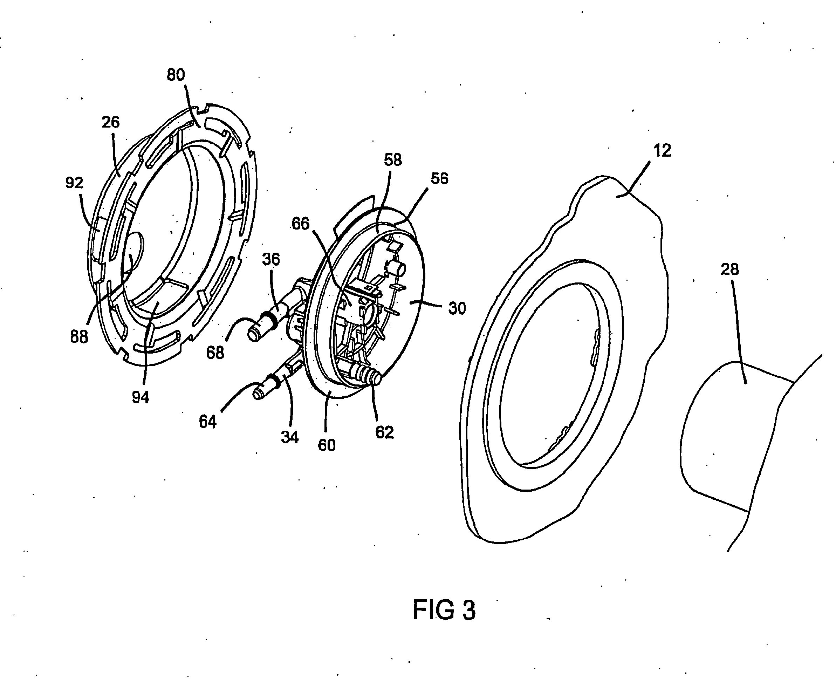

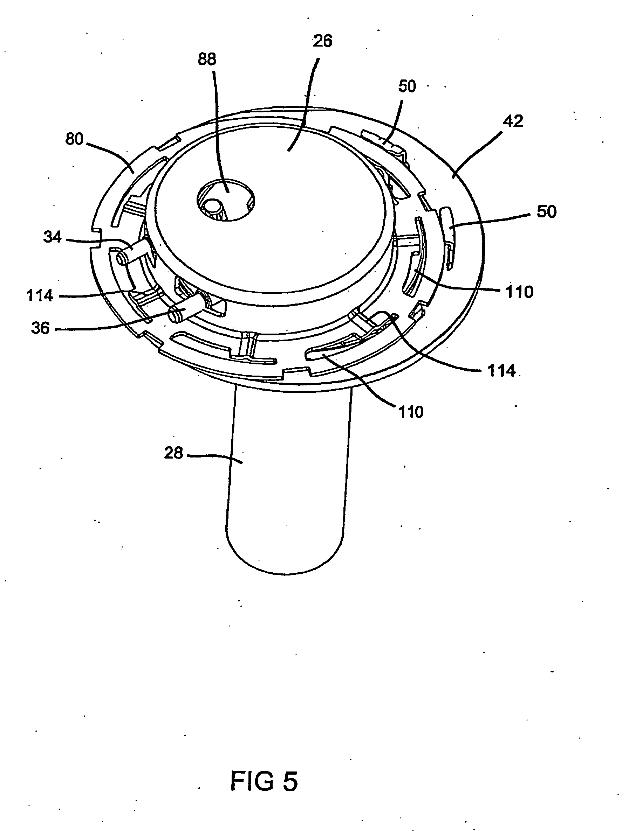

With reference now to FIGS. 2 and 3, the fuel sender flange 30 will be described in greater detail. The fuel sender flange 30 defines a generally planar upper surface 54 and a collar 56 extending radially therearound. The collar 56 defines a cylindrical wall 58 and a radial flange 60 (FIG. 3). The radial flange 60 is adapted to be supported by the radial flange 42 (FIG. 5) of the retaining portion 16 of the tank 12 in an assembled position. The first outlet port 36 generally includes an inlet 66 extending toward and communicating with the fuel sender 28 and an outlet 68 extending away from the fuel sender 28 and generally defining a right angle with respect to the inlet 66.

The second outlet port 34 generally includes an inlet 62 extending toward and communication with the fuel sender 28 and an outlet 64 extending away from the fuel sender 28 and generally defining a right angle with respect to the inlet 62. The respective outlets 64 and 68 of the outlet ports 34 and 36 extend substantially transverse to the planar upper surface 54. A pair of cylindrical extension rods 70 are formed on the fuel sender flange 30 for facilitating installation of the fuel sender assembly 20.

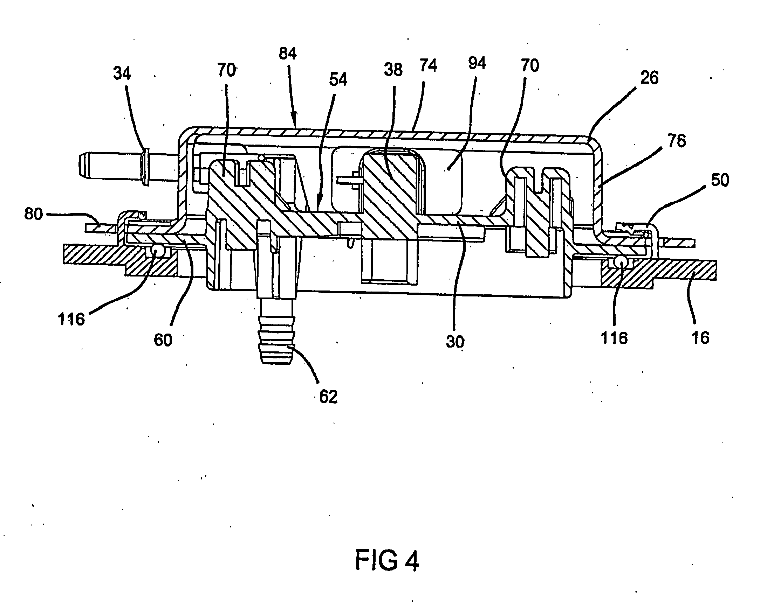

Referring now to FIGS. 1 - 4, the retention plate 26 will be described in further detail. The retention plate 26 generally includes a central body portion 74, a radial wall 76 and a radial flange 80. The radial wall 76 extends substantially transverse to the radial flange 80 and the flange 60 of the fuel sender flange 30. The central body portion 74 defines an upper planar surface 84 substantially lateral to and offset from the planar upper surface 54 of the fuel sender flange 30 (as best illustrated in FIG. 4).

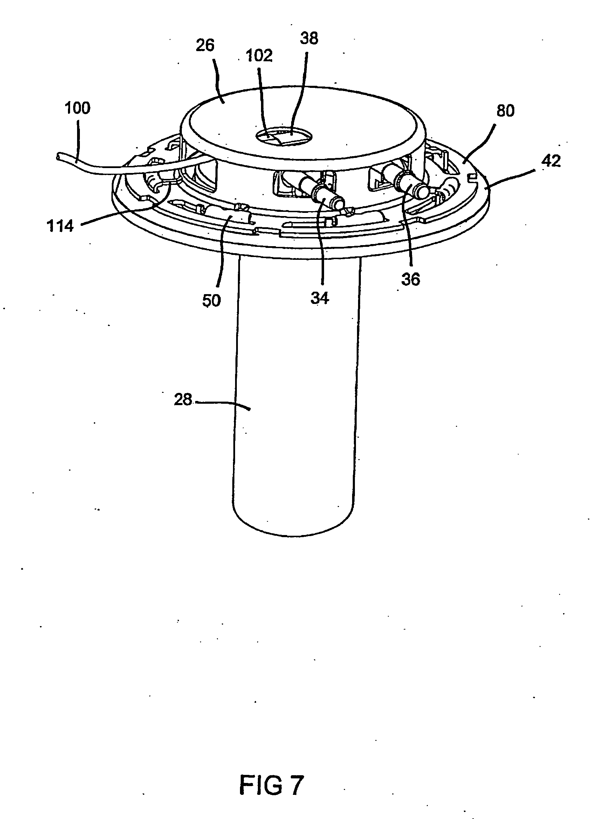

As best shown in FIG. 1, the central body portion 74 covers portions of the first and second outlet port 34 and 36, respectively, as well as the electrical receiver 38. In this way, the central body portion 74 provides protection for these components associated with the fuel sender flange 30. The central body portion 74 defines a passage 88 for communicating with the electrical receiver 38 during assembly. The radial wall 76 defines a first, second and third opening 90, 92 and 94, respectively. The first and second opening 90 and 92 are adapted to accept the first and second outlet ports 34 and 36, respectively, therethrough in an assembled position (FIG. 1). The third opening 94 is adapted to accept an electrical harness 100 therethrough (FIG. 7). The electrical harness 100 includes a connector 102 for mating with the electrical receiver 38 on the fuel sender flange 30. It is appreciated that while three openings 90, 92 and 94 are described as accommodating the outlet ports 34 and 36, and the electrical harness 100, fewer or additional distinct openings may be arranged on the radial wall 76. For example, a single opening may be adapted to accept the outlet ports 34 and 36 and the wire harness 100. Likewise, a plurality of openings may be arranged on the radial wall 76 for accommodating these and other components associated with the fuel sender assembly 20. A seal such as an o-ring 116 is further provided between the retaining portion 16 of the tank 12 and the flange 60 (FIG. 4).

Referring now to FIG. 2, a series of complementary slots 110 are arranged in the radial flange 80 of the retention plate 26 for cooperating with the retaining members 50 of the retaining portion 16. In addition, a complementary series of upwardly extending lands 114 are arranged around the radial flange 80 of the retention plate 26 for engaging the L-shaped retaining members 50 and for urging the retention plate 26 into the fuel sender flange 30 to influence a seal between the flange 60 of the fuel sender flange 30 and the radial flange 42 of the retaining portion 16.

The retention plate 26 is comprised of a rigid material such as, but not limited to, stamped steel. The structure of the retention plate 26 is robust and, as a result, is resistant to deformation. Specifically, the central body portion 74 provides structural support to discourage twisting or other deformation of the radial flange 80 and the retention plate 26 as a whole. As a result, the radial flange 80 provides torsional resistance at the interface between the flange 60 of the fuel sender flange 30 and the fuel tank 12. In this way, if the fuel tank 12 becomes dented or deformed during an accident for example, the retention plate 26 is adapted to resist leakage by providing resistance to twisting of the fuel tank 12 or other dimensional distortion at the fuel sender upper flange 30, fuel tank 12 interface.

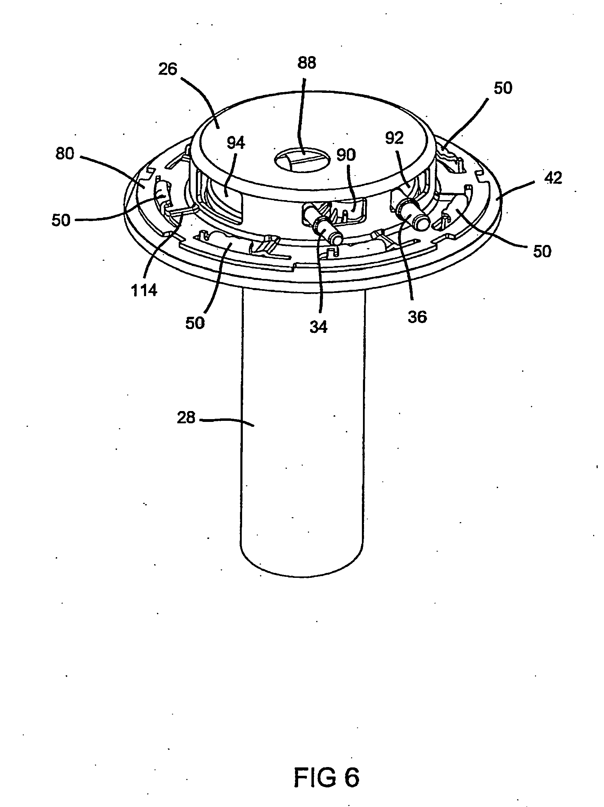

Turning now to FIGS. 5 and 6, an exemplary method for assembling the retention plate 26 to the fuel sender assembly 20 and fuel tank 12 will be described. First, the fuel sender assembly 20 is positioned into the aperture 46 of the fuel tank 12 such that the collar 56 of the fuel sender flange 30 is supported by the radial flange 42 of the retaining portion 16 of the fuel tank 12 (FIGS. 2 and 3). Next, the first and second outlet ports 34 and 36 are passed through the respective first and second openings 90 and 92 on the radial wall 76 of the retention plate 26. The L-shaped retaining members 50 are then passed through the respective slots 110 around the radial flange 80 of the retention plate 26. At this point, the lands 114 arranged on the radial flange 80 are positioned adjacent to the L-shaped retaining members 50.

Next, the retention plate 26 is rotated clockwise to engage the respective lands 114 with the L-shaped retention members 50 (FIG. 7). It is noted that the first and second opening 90 and 92, respectively, in the retention plate 26 accommodates rotation of the retention plate 26 between a release or disengaged position (FIG. 6) to an assembled position (FIG. 7) without interfering with the first and second outlet ports 34 and 36.

The electrical connector 102 is then passed through the third opening 94 and connected to the electrical receiver 38. Access to complete this connection may be provided by the passage 88 on the central body portion 74. It is appreciated that the electrical connector 102 may be secured to the electrical receiver 38 at an alternate point during assembly, such as, prior to securing the retention plate 26 to the fuel tank 12.

Those skilled in the art can now appreciate from the foregoing description that the broad teachings of the present invention can be implemented in a variety of forms.

## Claims

1. A fuel tank assembly comprising:
a tank (12) defining an aperture (40) on a first generally planar surface (48);
a plurality of retaining members (50) extending outwardly from said first planar surface (48) and arranged generally around said aperture (40);
a fuel sender assembly (20) disposed in said tank (20), having a lower sender module (28) and an upper fuel sender flange (30), adapted to mate with said first planar surface (48) of said tank (12) around said aperture (40) in an assembled position, said upper fuel sender flange (30) defining a second generally planar surface (54) , and
a retention plate (26) adapted to engage said plurality of retaining members (50) and urge said fuel sender flange (30) against said first planar surface (48) of said tank (12) in said assembled position, said retention plate (26) being comprised of a rigid material and the structure of said retention plate (26) being robust and, as a result, resistant to deformation.
**characterized in that** said retention plate (26) has a central body portion (74) axially offset from and adapted to substantially cover said second planar surface (54) of said fuel sender assembly (20) in said assembled position.

2. The fuel tank assembly of claim 1 wherein said retention plate (26) includes a radial flange (80) adapted to cooperate with said retaining members (50) in said assembled position.

3. The fuel tank assembly of claim 2 wherein said retention plate (26) includes a wall (76) extending between said radial flange (80) and said central body portion (74), and said wall (76) extending substantially transverse to said second planar surface (54) of said fuel sender assembly (20).

4. The fuel tank assembly of claim 3 wherein at least one opening (90, 92, 94) adapted to receive a fuel delivery line and a fuel return line therethrough is defined in said wall (76), said fuel delivery line and said fuel return line, respectively, communicating with said fuel sender assembly (20).

5. The fuel tank assembly of claim 4 wherein said at least one opening (94) is adapted to receive an electrical connection (102) therethrough, said electrical connection (102) adapted to connect with an electrical receiver (38) arranged on said second planar surface (54) of said fuel sender assembly (20).

6. The fuel tank assembly of claim 5 wherein said central body portion (74) defines a passage (88) adapted to provide access to said electrical receiver (38) and said electrical connection (102).

7. The fuel tank assembly of claim 6 wherein said retention plate (26) is rotatable between said assembled position wherein said retention plate (26) engages said retaining members (50), and a release position wherein said retention plate (26) is disengaged from said retaining members (50).

8. The fuel tank assembly of claim 7 wherein said at least one opening (90, 92, 94) provides clearance for said fuel delivery line, said fuel return line and said electrical connection (102), respectively, to accommodate rotation of said retention plate (26) between said assembled position and said release position.

9. The fuel tank assembly of claim 1 wherein said retention plate (26) is comprised of stamped steel.

## Patentansprüche

1. Kraftstofftank-Baugruppe, aufweisend:
einen Tank (12), der auf einer ersten im Allgemeinen planen Oberfläche (48) eine Öffnung definiert;
eine Vielzahl von Rückhalteelementen (50), die von der ersten planen Oberfläche (48) nach außen verlaufen und die im Allgemeinen um die Öffnung (40) herum angeordnet sind;
eine Kraftstoffzufuhr-Baugruppe (20) mit einem unteren Zufuhrmodul (28) und einem oberen Kraftstoffzufuhr-Flansch (30), die in dem Tank (20) angeordnet ist und die dafür ausgelegt ist, in der Einbauposition um die Öffnung (40) herum auf die erste plane Oberfläche (48) des Tanks (12) zu passen, wobei der obere Kraftstoff-Zufuhrflansch (30) eine zweite im Allgemeinen plane Oberfläche (54) definiert, und
eine Rückhalteplatte (26), die dafür ausgelegt ist, in die Vielzahl von Rückhalteelementen (50) einzugreifen und den Kraftstoff-Zufuhrflansch (30) in der Einbauposition gegen die erste plane Oberfläche (48) des Tanks (12) zu drängen, wobei die Rückhalteplatte (26) aus einem starren Material besteht und die Struktur der Rückhalteplatte (26) robust und infolgedessen beständig gegen Verformungen ist,
**dadurch gekennzeichnet, dass** die Rückhalteplatte (26) einen mittleren Körperabschnitt (74) aufweist, der axial zur zweiten planen Oberfläche (54) der Kraftstoff-Lieferanordnung (20) versetzt ist und dafür ausgelegt ist, diese in der Einbauposition im Wesentlichen abzudecken.

2. Kraftstofftank-Baugruppe nach Anspruch 1, wobei die Rückhalteplatte (26) einen radialen Flansch (80) aufweist, der dafür ausgelegt ist, in der Einbauposition mit den Rückhalteelementen (50) zusammenzuwirken.

3. Kraftstofftank-Baugruppe nach Anspruch 2, wobei die Rückhalteplatte (26) eine Wand (76) aufweist, die zwischen dem radialen Flansch (80) und dem mittleren Körperabschnitt (74) verläuft, und wobei die Wand (76) im Wesentlichen quer zu der zweiten planen Oberfläche (54) der Kraftstoffzufuhr-Baugruppe (20) verläuft.

4. Kraftstofftank-Baugruppe nach Anspruch 3, wobei mindestens eine Öffnung (90, 92, 94), die dafür ausgelegt ist, eine Kraftstoffzuleitung und eine Kraftstoffrückleitung durch sich aufzunehmen, in der Wand (76) definiert ist, wobei die Kraftstoffzuleitung und die Kraftstoffrückleitung jeweils mit der Kraftstoffzufuhr-Baugruppe (20) in Verbindung stehen.

5. Kraftstofftank-Baugruppe nach Anspruch 4, wobei die mindestens eine Öffnung (94) dafür ausgelegt ist, eine elektrische Verbindung (102) durch sich aufzunehmen, wobei die elektrische Verbindung (102) dafür ausgelegt ist, mit einem elektrischen Empfänger (38), der auf der zweiten planen Oberfläche (54) der Kraftstoffzufuhr-Baugruppe (20) angeordnet ist, verbunden zu werden.

6. Kraftstofftank-Baugruppe nach Anspruch 5, wobei der mittlere Körperabschnitt (74) einen Durchgang (88) definiert, der dafür ausgelegt ist, einen Zugang zum elektrischen Empfänger (38) und zur elektrischen Verbindung (102) zu ermöglichen.

7. Kraftstofftank-Baugruppe nach Anspruch 6, in der die Rückhalteplatte (26) zwischen der Einbauposition, wo die Rückhalteplatte (26) in die Rückhalteelemente (50) eingreift, und einer Ausbauposition, in der die Rückhalteplatte (26) von den Rückhalteelementen (50) gelöst ist, gedreht werden kann.

8. Kraftstofftank-Baugruppe nach Anspruch 7, wobei die mindestens eine Öffnung (90, 92, 94) eine Lücke für die Kraftstoffzuleitung, die Kraftstoffrückleitung bzw. die elektrische Verbindung bietet, um die Drehung der Rückhalteplatte (26) zwischen der Einbau- und der Ausbauposition unterbringen zu können.

9. Kraftstofftank-Baugruppe nach Anspruch 1, wobei die Rückhalteplatte (26) aus gestanztem Stahl besteht.

## Revendications

1. Ensemble de réservoir de carburant comprenant :
un réservoir (12) formant une ouverture (40) sur une première surface sensiblement plane (48) ;
une pluralité d'éléments de retenue (50) s'étendant vers l'extérieur de ladite première surface plane (48) et agencés sensiblement autour de ladite ouverture (40) ;
un ensemble de pompe de carburant (20) disposé dans ledit réservoir (20) ayant un module de pompe inférieur (28) et un rebord de pompe de carburant supérieur (30), apte à s'accoupler avec ladite première surface plane (48) dudit réservoir (12) autour de ladite ouverture (40) dans une position assemblée, ledit rebord de pompe de carburant supérieur (30) formant une deuxième surface sensiblement plane (54), et
une plaque de retenue (26) apte à venir en prise avec ladite pluralité d'éléments de retenue (50) et à solliciter ledit rebord de pompe de carburant (30) contre ladite première surface plane (48) dudit réservoir (12) dans ladite position assemblée, ladite plaque de retenue (26) se composant d'une matière rigide et la structure de ladite plaque de retenue (26) étant robuste et, par conséquent, résistante à la déformation,
**caractérisé en ce que** ladite plaque de retenue (26) a une partie de corps centrale (74) décalée axialement par rapport à et apte à recouvrir sensiblement ladite deuxième surface plane (54) dudit ensemble de pompe de carburant (20) dans ladite position assemblée.

2. Ensemble de pompe de carburant selon la revendication 1, dans lequel ladite plaque de retenue (26) comprend un rebord radial (80) apte à coopérer avec lesdits éléments de retenue (50) dans ladite position assemblée.

3. Ensemble de pompe de carburant selon la revendication 2, dans lequel ladite plaque de retenue (26) comprend une paroi (76) s'étendant entre ledit rebord radial (80) et ladite partie de corps centrale (74), et ladite paroi (76) s'étendant de manière sensiblement transversale à ladite deuxième surface plane (54) dudit ensemble de pompe de carburant (20).

4. Ensemble de pompe de carburant selon la revendication 3, dans lequel au moins une ouverture (90, 92, 94) apte à recevoir une conduite d'alimentation en carburant et une conduite de retour de carburant passant à travers celle-ci est formée dans ladite paroi (76), ladite conduite d'alimentation en carburant et ladite conduite de retour de carburant, respectivement, communiquant avec ledit ensemble de pompe de carburant (20).

5. Ensemble de pompe de carburant selon la revendication 4, dans lequel ladite au moins une ouverture (94) est apte à recevoir une connexion électrique (102) passant à travers celle-ci, ladite connexion électrique (102) étant apte à se connecter avec un récepteur électrique (38) agencé sur ladite deuxième surface plane (54) dudit ensemble de pompe de carburant (20).

6. Ensemble de réservoir de carburant selon la revendication 5, dans lequel ladite partie de corps centrale (74) forme un passage (88) apte à offrir un accès audit récepteur électrique (38) et à ladite connexion électrique (102).

7. Ensemble de réservoir de carburant selon la revendication 6, dans lequel ladite plaque de retenue (26) est rotative entre ladite position assemblée dans laquelle ladite plaque de retenue (26) vient en prise avec lesdits éléments de retenue (50), et une position libérée dans laquelle ladite plaque de retenue (26) est dégagée desdits éléments de retenue (50).

8. Ensemble de réservoir de carburant selon la revendication 7, dans lequel ladite au moins une ouverture (90, 92, 94) fournit une évacuation pour ladite conduite d'alimentation en carburant, ladite conduite de retour de carburant et ladite connexion électrique (102), respectivement, pour permettre une rotation de ladite plaque de retenue (26) entre ladite position assemblée et ladite position libérée.

9. Ensemble de réservoir de carburant selon la revendication 1, dans lequel ladite plaque de retenue (26) se compose d'un acier forgé.
